# EUROPÄISCHE PATENTSCHRIFT

(11) **EP 1 149 400 B1**
(45) Veröffentlichungstag und Bekanntmachung des Hinweises auf die Patenterteilung: **23.04.2003**
(21) Anmeldenummer: 99941599.5
(22) Anmeldetag: 11.08.1999
(51) Int. Cl.: H01H 71/10

(54) **ELEKTRISCHES GERÄT MIT EINER VERBINDUNGSEINRICHTUNG ZUR VERBINDUNG MIT EINEM ZWEITEN ELEKTRISCHEN GERÄT**
ELECTRIC DEVICE WITH A CONNECTION CLIP AND A RECEIVING FIXTURE FOR A SECOND ELECTRIC DEVICE
APPAREIL ELECTRIQUE A DISPOSITIF DE RACCORDEMENT POUR LE RACCORDEMENT A UN DEUXIEME APPAREIL ELECTRIQUE

(30) Priorität: 09.10.1998 DE 19846578
(43) Veröffentlichungstag der Anmeldung: 31.10.2001
(73) Patentinhaber: AEG Niederspannungstechnik GmbH & Co. KG, 24534 Neumünster (DE)
(72) Erfinder: HEINDORF, Helmut, D-31785 Hameln (DE); HILLEBRAND, Dietmar, D-31848 Bad Münder (DE); PRIES, Jürgen, D-31785 Hameln (DE); SCHUBERT, Michael, D-38444 Wolfsburg (DE)
(74) Vertreter: Leson, Thomas Johannes Alois, Dipl.-Ing.
(86) Internationale Anmeldenummer: EP9905913
(87) Internationale Veröffentlichungsnummer: WO00022642

(56) Entgegenhaltungen:
- DE-A- 4 403 585
- DE-U- 29 804 284
- FR-A- 1 590 869
- FR-A- 2 616 582
- GB-A- 2 009 832
- US-A- 3 091 487
- US-A- 4 270 035

## Beschreibung

Die vorliegende Erfindung bezieht sich auf eine Verbindungseinrichtung zur Verbindung mehrerer Einzelkomponenten. Eine solche Verbindungseinrichtung besteht aus einem Verbindungsclip, der zwei Einzelkomponenten miteinander verbindet und aus einer Verbindungsclipaufnahme an jeweils einer der zu verbindenden Einzelkomponenten. Dadurch wird ein System Verbindungsclip/Verbindungsclipaufnahme gebildet, das die Verbindungseinrichtung darstellt. Eine derartige Verbindungseinrichtung ist z. B. aus DE-U-29 804 284 bekannt.

Die vorliegende Erfindung soll vorzugsweise zur Verbindung von elektrotechnischen Bauteilen dienen, wie beispielsweise Leistungsschaltern, Leitungsschutzschaltern, Fehlerstromschutzschaltern, etc. Allerdings soll bereits hier angemerkt werden, daß die Verwendung nicht allein auf elektrotechnische Artikel beschränkt ist. Vielmehr wird hier nur beispielhaft auf diesen Bereich eingegangen, da die derzeitig bevorzugten Ausführungsbeispiele in diesem Bereich angesiedelt sind.

Bei der Installation einer Vielzahl elektrotechnischer Bauteile müssen diese oftmals in Schaltkästen nebeneinander angeordnet und miteinander verbunden werden. Dies geschah bisher entweder durch eine durchgängige Nietung oder mittels sogenannter Brillenfedern, die wie Spannklammern zwei nebeneinander plazierte Bauteile zusammengespannt halten, wenn die aufgerollten Federenden in entsprechende Ausnehmungen der Bauteile eingreifen und der Bügel der Brillenfeder die beiden Bauteile überbrückt und somit verbindet.

Diese Verbindung weist jedoch mehrere Nachteile auf. Zum einen ist die Montage relativ schwierig, da eine hohe Geschicklichkeit erforderlich ist, um die Brillenfederteile in den Ausnehmungen der zu verbindenden Bauteile zu plazieren, ohne dabei die Brillenfeder zu verlieren. Dadurch wurde die Montage erschwert, verlängert und somit auch verteuert. Ferner wurden die beiden zu verbindenden Einzelkomponenten nur durch Anlage der beiden Seitenflächen aneinander ausgerichtet. Eine zusätzliche Ausrichtung war erforderlich, z. B. in Form von Zentrierung.

Es ist daher eine Aufgabe der vorliegenden Erfindung, eine Verbindungseinrichtung zu schaffen, die in der Lage ist, mehrere Einzelkomponenten auf einfache Art und Weise zu verbinden, wobei gleichzeitig folgende Vorteile erzielt werden sollen: Die Montage soll einfach, zeitsparend und somit preiswert sein; die Verbindung zweier Bauteile soll stabil sein und für eine gleichzeitige Zentrierung sorgen; ferner soll die Verbindungseinrichtung nicht mehr ohne weiteres lösbar sein.

Ferner soll eine Verbindungseinrichtung möglichst multifunktionell sein, um mit mehreren verschiedenen Verbindungselementen koppelbar zu sein.

Diese Aufgabe wird mit einem Verbindungsclip gemäß Anspruch 1, einer Verbindungsclipaufnahme gemäß Anspruch 8, sowie mit einem elektrischen Gerät mit einer Verbindungseinrichtung gemäß Anspruch 11 gelöst. Weitergehende vorteilhafte Ausgestaltungen der Erfindung sind Gegenstand der Unteransprüche.

Im einzelnen sollen nun wesentliche Vorteile des Erfindungsgegenstandes sowie deren vorteilhafte Weiterbildungen kurz erläutert werden.

Durch die Schnappverbindung des Verbindungsclips in die Verbindungsclipaufnahme wird ein Zusammenbau zweier Einzelkomponenten äußerst einfach. Ferner wird die Verbindung zweier zu verbindender Bauteile durch das Einschnappen der Einschnappnasen in Hinterschneidungen der Nut unlösbar gemacht, vor allem da sich die Hinterschneidungen, in die die Einschnappnasen des Verbindungsclips einschnappen, im zusammengebauten Zustand im Inneren der beiden Bauteile befinden und somit von außen nicht mehr zugänglich sind.

Indem die Nut der Verbindungsclipaufnahme einer Einzelkomponente eine Tiefe hat, die in etwa der halben Dicke des Stabs des Verbindungsclips entspricht, greift der Stab des Verbindungsclips beim Einstecken des Verbindungsclips in die beiden Nuten der Verbindungsclipaufnahmen von zwei aneinandergelegten Einzelkomponenten gleichzeitig ein. Des weiteren schnappen die Einschnappnasen des Verbindungsclips in beide Hinterschneidungen der Nuten der beiden zu verbindenden Einzelkomponenten ein. Dadurch wird die Konstruktion des Verbindungsclips vereinfacht und dessen Herstellungskosten können gering gehalten werden.

Ferner wird dadurch, daß die stiftartigen Einsteckabschnitte des Ankerbalkens des Verbindungsclips in entsprechende Einsteckaufnahmen der zu verbindenden Einzelkomponenten eingesteckt werden, eine einfache Fixierung der beiden Einzelkomponenten in einer Richtung quer zur Einsteckrichtung erreicht. Gleichzeitig sorgt der Verbindungsclip mit seinen beiden Einsteckabschnitten für eine korrekte Positionierung der beiden Einzelkomponenten zueinander.

Durch außenseitige Kerben, die im umgebogenen Eckbereich des Ankerbalkens am Übergang zu den Einsteckabschnitten vorgesehen sind, ist es möglich, die stiftartigen Einsteckabschnitte etwas flexibel zu gestalten, so daß ein Aufweiten dieser Einsteckabschnitte hinsichtlich des Stabes möglich ist. Gleiches wird durch eine Materialausnehmung im inneren Eckbereich an der Biegung zwischen dem Ankerbalken und dem Einsteckabschnitt erreicht.

Die Nuten und die Einsteckaufnahmen in der Verbindungsclipaufnahme können bei der Herstellung der Einzelkomponenten leicht berücksichtigt werden, so daß deren Herstellkosten gering bleiben.

Gemäß einem weiteren Aspekt der Erfindung ist es möglich, die Verbindungsclipaufnahme multifunktionell zu gestalten. Dadurch können verschiedene Verbindungsclips wahlweise verwendet werden, um zwei Bauteile miteinander zu verbinden.

Die Erfindung wird anhand der nachfolgenden Beschreibungen detaillierter Ausführungsbeispiele unter Bezugnahme auf die Fig.en näher erläutert.

Fig. 1 zeigt eine perspektivische Darstellung des Verbindungsclips sowie einer zu verbindenden Einzelkomponente, die die Verbindungsclipaufnahme aufweist.

Fig. 2 zeigt eine Einzeldarstellung des Verbindungsclips in perspektivischer Ansicht.

Fig. 3 zeigt den Verbindungsclip in perspektivischer Ansicht im eingebauten Zustand in einer zu verbindenden Einzelkomponente, die mit einer entsprechenden Verbindungsclipaufnahme ausgestattet ist.

Fig. 4 zeigt eine Schnittansicht entlang der Linie IV-IV in Fig. 3 mit Teilen zweier zu verbindender Einzelkomponenten.

Fig. 5 zeigt eine perspektivische Ansicht eines anderen Verbindungsclips.

Fig. 6 ist eine perspektivische Ansicht zweier zu verbindender Einzelkomponenten sowie des Verbindungsclips aus Fig. 5, wobei beide Einzelkomponenten teilweise ausgebrochen dargestellt sind und eine der Einzelkomponenten darüber hinaus nur teilweise dargestellt ist.

Fig. 7 zeigt dieselbe Ansicht wie Fig. 6, wobei sich jedoch der Verbindungsclip in seinem eingeschnappten Zustand befindet.

Fig. 8 zeigt eine weitere perspektivische Darstellung von Fig. 7.

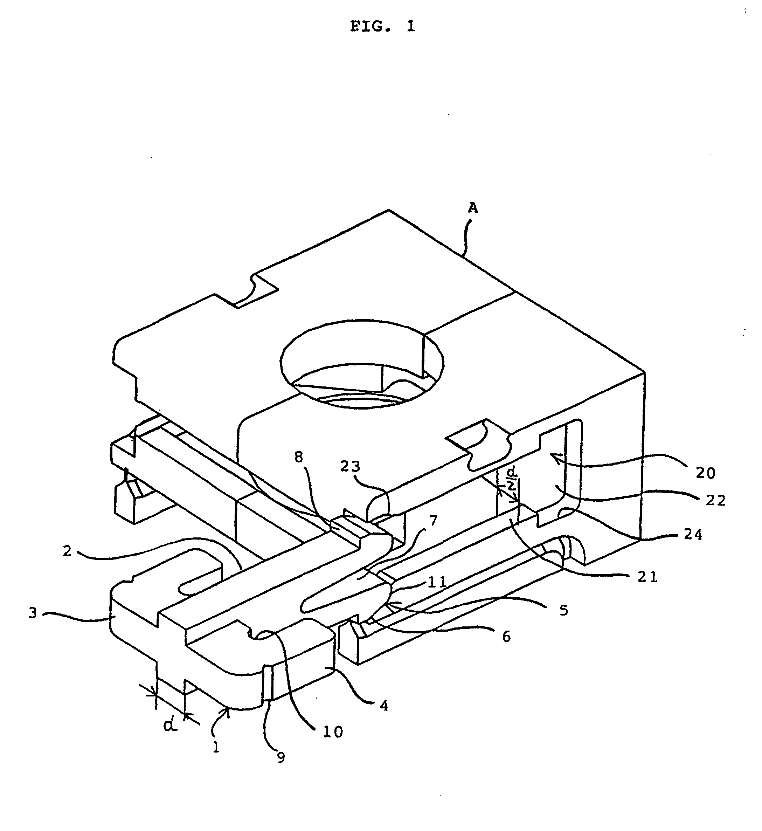

Es folgen Erläuterungen zu einem ersten Ausführungsbeispiel unter Bezugnahme auf die Fig. 1 bis 4.

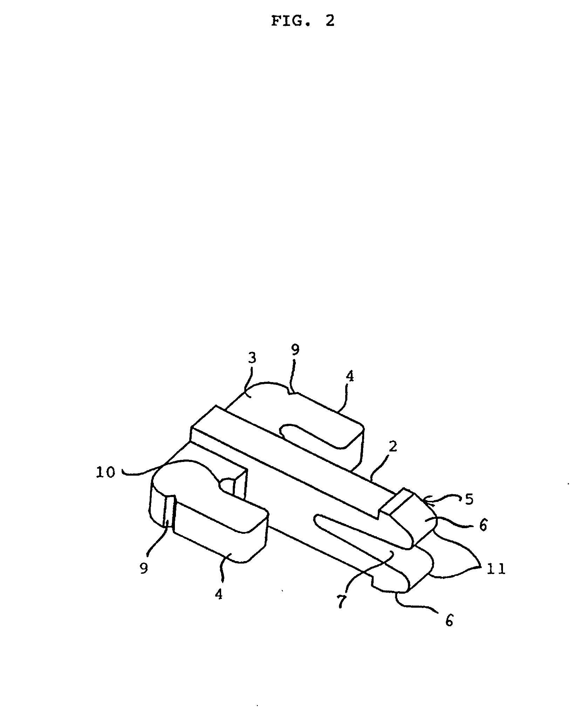

Zunächst wird der Verbindungsclip 1 anhand von Fig. 2 beschrieben.

Der Verbindungsclip hat im wesentlichen eine ankerförmige Gestalt. Er besteht aus einem Stab 2 und einem Ankerbalken 3, der an einem Ende des Stabs quer dazu einstückig ausgebildet ist. Der Stab 2 und der Ankerbalken 3 haben einen im wesentlichen rechtwinkligen Querschnitt und sind so angeordnet, daß der Stab 2 hochkant zum Ankerbalken 3 ausgerichtet ist.

Der Stab 2 weist an seinem anderen Ende ein Einschnappelement 5 auf. Das Einschnappelement 5 besteht aus einer V-förmigen Aussparung 7, die am unteren Ende des Stabs 2 geöffnet ist und nach innen zusammenläuft. Dadurch entstehen Fußteilhälften. An diesen Fußteilhälften sind Einschnappnasen 11 vorgesehen, die an der der V-förmigen Aussparung 7 abgewandten Seite des Stabs 2 vorstehen. Diese Einschnappnasen 11 haben eine Montagehilfsschräge 13 zur Erleichterung des Einschiebens des Verbindungsclips in eine entsprechende Nut in der zu verbindenden Einzelkomponente bei der späteren Montage. Durch die V-förmige Aussparung 7 ist der Stab 2 im unteren Bereich flexibel und kann beim Einschieben in eine Nut, die etwas kleiner als der Fußteil ist, etwas zusammengedrückt werden. Dadurch wird ein Einschieben in eine Ausnehmung ermöglicht, deren Breite etwas kleiner als die Breite ist, die der Fußteil mitsamt den Einschnappnasen wäre, da die Einschnappnasen einfach nach innen gebogen werden, um sich der Breite der Ausnehmung anzupassen.

Der Ankerbalken 3 hat an seinen beiden Endbereichen einen rechtwinklig gebogenen stiftartigen Einsteckabschnitt 4, der um ca. 90 Grad so gebogen ist, daß er sich etwa parallel zum Stab 2 erstreckt. Im Winkelbereich sind an der Innenseite eine Ausnehmung 10 vorgesehen, um die stiftartigen Einsteckabschnitte 4 mit einer gewissen Flexibilität auszustatten.

Im folgenden soll eine Verbindungsclipaufnahme, die in einem zu verbindenden Bauteil A, B vorgesehen ist und zum Aufnehmen des Verbindungsclips dient, näher erläutert werden. Dabei wird insbesondere auf Fig. 1 verwiesen.

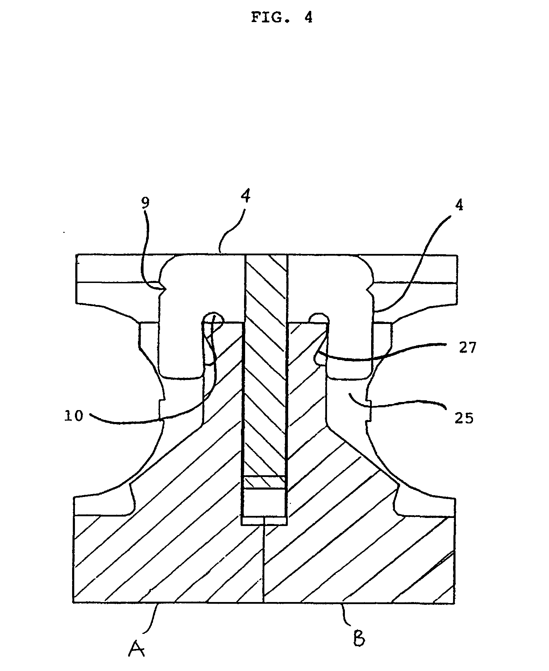

Die Verbindungsclipaufnahme ist zweimal vorgesehen und befindet sich an zwei gegenüberliegenden Seiten eines zu verbindenden Bauteils A, B. Dadurch kann ein zu verbindendes Bauteil wahlweise rechts oder links oder auch gleichzeitig an beiden Seiten mit einem oder zwei zu verbindenden Bauteilen verbunden werden. Eine solche Seite wird mit einer entsprechenden Seite einer weiteren Einzelkomponente B in Anlage gebracht werden und durch den Verbindungsclip 1 werden beide Bauteile zusammen fixiert (s. Fig. 4).

Die Verbindungsclipaufnahme besteht aus einer Nut 20, die an einer Seitenfläche der zu verbindenden Einzelkomponente A so ausgebildet ist, daß sie an einem Ende offen ist. Diese Nut 20 verläuft im wesentlichen langgestreckt von einer Einschubseite, der offenen Nutseite nämlich, ausgehend. Dabei ist am offenen Nutanfang eine Montagehilfsschräge 23 vorgesehen, die für einen leichteren Einschub des Verbindungsclips dient. Danach folgt ein Einführabschnitt 21, der eine Nutbreite hat, die in etwa der Breite des einzuschiebenden Stabs des Verbindungsclips entspricht. Da jedoch der Verbindungsclip eine Einschnappnase 11 aufweist, deren Breite sich über die normale Breite des Stabs 3 hinaus erstreckt, werden die Einschnappnasen 11 beim Passieren des Einführabschnitts 21 etwas zusammengedrückt. Dieses Zusammendrücken ist durch die V-Aussparung 7 möglich. An diesen Einführabschnitt 21 schließt sich ein Einschnappabschnitt 22 an.

Der Einschnappabschnitt 22 weist eine Hinterschneidung 24 auf, deren Breite breiter als die Breite des Einführabschnitts 21 ist. Dadurch kann sich das Einschnappelement nach dem zusammengedrückten Zustand im Einführabschnitt 21 wieder ausdehnen und schnappt somit in die Hinterschneidung 24 ein.

Gemäß Fig. 1 hat die Nut 20 eine Nuttiefe d/2, die in etwa der halben Dicke d des Stabes 2 entspricht, so daß beim Einschieben des Verbindungsclips 1 nur eine Hälfte des Stabs in der Dickenerstreckung mit der Nut 20 der Verbindungsclipaufnahme in Eingriff gelangt. Die andere Hälfte steht nach außen vor.

Im folgenden wird der Zusammenbau zweier Einzelbauteile beschrieben. Zwei einzelne zu verbindende Bauteile A, B werden mit den zwei Seiten aneinander gelegt (s. Fig. 4), die jeweils die Verbindungsclipaufnahme aufweisen. Dadurch entsteht aus den zwei Nuten 20 eine sacklochartige Öffnung, die an ihrem Ende durch die Hinterschneidung 24 zum Einschnappabschnitt 22 verbreitert ist. Wenn der Verbindungsclip in die Nut 20 eingeschoben wird, werden die Einschnappnasen 11 des Schnappelementes 5 flexibel zusammengedrückt. Der Verbindungsclip wird so lange eingeschoben, bis die Einschnappnasen 11 in die Hinterschneidung 24 der Nut 20 in der Verbindungsclipaufnahme einrasten, d.h. daß sich die Einschnappnasen 11 aus ihrer zusammengedrückten Position wieder in ihre Normalstellung zurückverformen.

Gleichzeitig werden die stiftartigen Einsteckabschnitte 4 des Ankerbalkens 3 in entsprechende Einsteckaufnahmen 25, die zusätzlich in der Verbindungsclipaufnahme ausgebildet sind, eingeschoben. Dabei werden eventuell vorhandene Maßungenauigkeiten sowohl beim Verbindungsclip als auch bei der Verbindungsclipaufnahme durch die Flexibilität des stiftartigen Einsteckabschnitts 4 ausgeglichen. Die Flexibilität wird durch die Materialausnehmung 10 mit herbeigeführt, wie bereits erläutert wurde.

Indem die Einschnappnasen 11 des Verbindungsclips 1 in den Einschnappabschnitt 22 der Nut 20 der Verbindungsclipaufnahme einrasten, wird die Verbindung unlösbar, da die Einschnappnasen in der Hinterschneidung nicht mehr zugänglich sind. Durch das gleichzeitige Einführen der stiftartigen Einsteckabschnitte 4 in die entsprechenden Einsteckaufnahmen 25 wird ein Ausrichten aller Teile zueinander erreicht.

Es folgt nun die Beschreibung eines zweiten Ausführungsbeispiels der vorliegenden Erfindung.

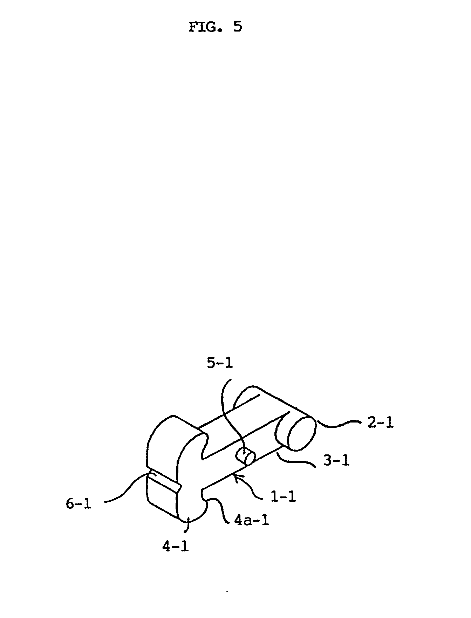

Im folgenden soll noch auf eine Besonderheit dieses Ausführungsbeispiels eingegangen werden, nämlich die mehrfache Einsetzbarkeit der Verbindungsclipaufnahme. Es muß nämlich nicht zwangsläufig immer der Verbindungsclip gemäß der vorliegenden Erfindung verwendet werden. Denkbar ist grundsätzlich auch die Nutzung für einen anderen Verbindungsclip. Um dies zu ermöglichen, ist die vorhandene und soweit beschriebene Verbindungsclipaufnahme auf geschickte Art und Weise so gestaltet, daß sowohl ein Verbindungsclip der bisher beschriebenen Art, als auch ein Verbindungsclip einer weiteren Art eingesetzt werden kann. Ein solcher anderer Verbindungsclip ist in Fig. 5 dargestellt. Die Fig.en 6 bis 8 zeigen, wie der Verbindungsclip nach Fig. 5 in die Verbindungsclipaufnahme eingesetzt wird.

Unter Bezugnahme auf Fig. 5 soll nun der Verbindungsclip 1-1 näher erläutert werden.

Der Verbindungsclip 1-1 hat einen im wesentlichen ankerförmigen Aufbau, der einen Stab 3-1 sowie einen Ankerbalken 4-1 aufweist, der sich quer über ein Ende des Stabs erstreckt. Sowohl der Stab 3-1 als auch der Ankerbalken 4-1 sind flach ausgebildet und haben einen rechteckigen Querschnitt. Am anderen Ende des Stabs, gegenüber dem Ankerbalken 4-1, befindet sich ein Drehfuß 2-1, der als runder Wellenabschnitt ausgeformt ist, der links und rechts vom Stab 3-1 seitlich vorsteht. Die Drehachse des Drehfußes steht senkrecht zur Längsachse des Ankerbalkens 4-1. Außerdem ist die Drehachse des Drehfußes 2-1 quer zur Längserstrekkung des Ankerbalkens 4-1 ausgerichtet. Etwa in der Mitte des Stabs 3-1 ist ein Zapfen 5-1 vorgesehen, der sich parallel zur Drehachse des Drehfußes 2-1 erstreckt und somit ebenfalls seitlich von dem Stab 3-1 etwas vorsteht. Der Ankerbalken 4-1 hat einen leicht gekrümmten, bauchigen Einschnappabschnitt 4a-1, der sich zum Stab 3-1 hin krümmt. Dieser Einschnappabschnitt 4a-1 dient als Einschnappelement bei der Montage. Durch eine geeignete Ausgestaltung des Ankerbalkens, beispielsweise durch eine Kerbe in der Mitte des Ankerbalkens, kann zur Demontage des Gerätes die Spitze eines Schraubendrehers angesetzt werden.

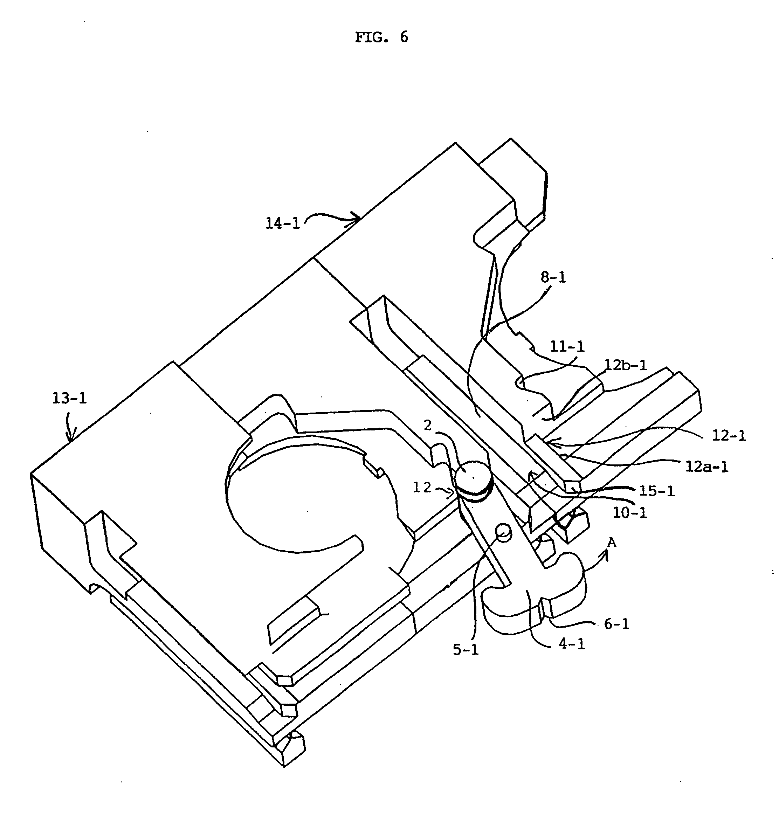

Wie in Fig. 6 zu sehen ist, sind mit 13-1 und 14-1 zwei zu verbindende Bauteile bezeichnet, wobei beispielsweise das Bauteil 13-1 ein Hauptgerät ist, und das Bauteil 14-1 ein Hilfsgerät ist, das an das Hauptgerät montiert werden muß.

In jedem der beiden zu verbindenden Bauteile 13-1 und 14-1 sind jeweils eine Verbindungsclipaufnahme sowie zwei jeweils links und rechts in der Verbindungsclipaufnahme vorgesehene Ausnehmungen 11-1 vorgesehen.

Im folgenden wird die Verbindungsclipaufnahme beschrieben.

Wie aus Fig. 6 hervorgeht, ist an einer Seite des Bauteils 13-1 und 14-1 eine Nut 7-1 vorgesehen, die sich über die gesamte Seitenlänge hin erstreckt. Die Nut 7-1 ist an beiden Seitenenden offen. In der Nut ist eine Hinterschneidung 9-1 vorgesehen, so daß die Nut 7-1 zusammen mit der Hinterschneidung 9-1 eine Art Führungsnut bildet, in der der Drehfuß 2-1 des Verbindungsclips 1-1 aufgenommen ist und nach links und rechts gleitend verschieblich gelagert ist. Dabei befindet sich der Drehfuß 2-1 in der Hinterschneidung 9-1, während der Stab 3-1 in der Nut 7-1 geführt wird. Der Ankerbalken 4-1 befindet sich außerhalb der Nut 7-1. Dadurch, daß der Drehfuß 2-1 in der Hinterschneidung 9-1 geführt wird, kann der Verbindungsclip unmöglich aus der Nut herausfallen, so daß er nicht mehr verlorengehen kann. Der Zapfen 5-1 verhindert, daß der Ankerbalken 4-1 versehentlich durch die Nut 7-1 ins Innere des Bauteils 13-1 geraten kann, da er dann nicht mehr von außen zugänglich wäre.

Im folgenden wird die Eingriffsausnehmung in den Bauteilen 13-1 und 14-1 beschrieben.

Diese dient dazu, den Einschnappabschnitt 4a-1 des Verbindungsclips 1-1 aufzunehmen und festzuhalten, damit ein Lösen nicht mehr ohne weiteres möglich ist. Dazu ist im Inneren, jeweils links und rechts auf der Seite der Nut 7-1 der Bauteile 13-1, 14-1 eine Ausnehmung 11-1 ausgebildet. Diese Ausnehmung 11-1 ist im wesentlichen korrespondierend zur Gestalt des Einschnappabschnitts 4a-1 des Ankerbalkens ausgebildet. D.h. sie besteht aus einer Anlagefläche, die sich in etwa senkrecht zur Erstreckung der Nut 7-1 ins Innere des Bauteils 13-1, 14-1 hinein erstreckt. Diese Anlagefläche hat am Ende eine Hinterschneidung, die in etwa der Form des bauchigen Einschnappabschnitts 4a-1 des Verbindungsclips 1-1 entspricht. Bei der Montage der beiden zu verbindenden Bauteile kann der Einschnappabschnitt 4a-1 in die Ausnehmung 11-1 einschnappen und in die Hinterschneidung einrasten. Je nach Ausgestaltung der Ausnehmung und Einstellung der Materialflexibilität des Verbindungsclips kann die Einrastfunktion von sehr streng und schwer wieder lösbar bis sehr leicht und leicht lösbar eingestellt werden.

Im folgenden wird die Verbindung der beiden Bauteile 13-1, 14-1 durch den Verbindungsclip 1-1 beschrieben.

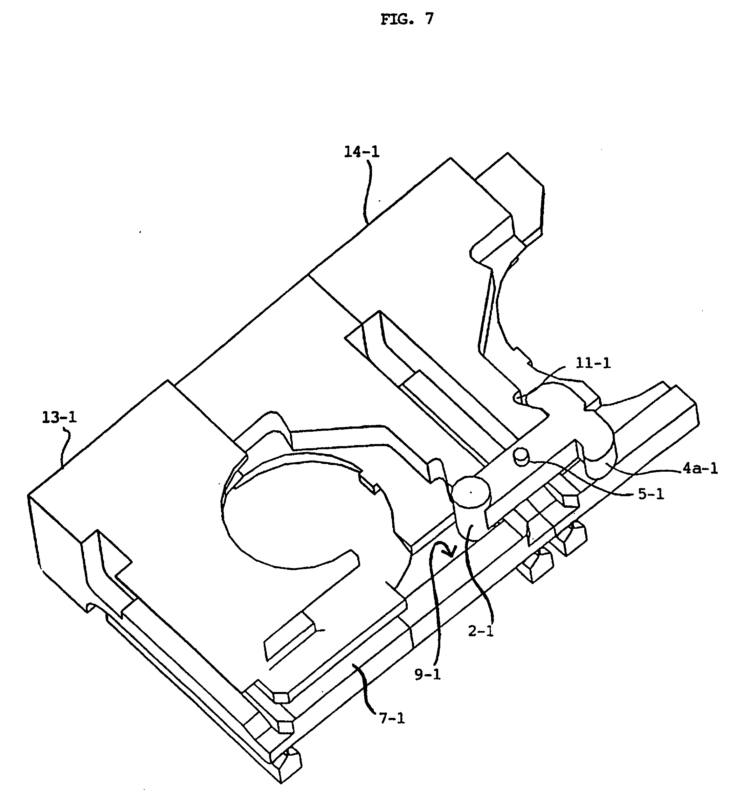

Fig. 6 zeigt eine Darstellung, wo der Verbindungsclip 1-1 in einem zu verbindenden Bauteil 13-1 angeordnet ist, und sich in seiner geöffneten Position befindet. Das mit dem Bauteil 13-1 zu verbindende Bauteil 14-1 befindet sich in einer Anlageposition, in der die beiden Bauteile miteinander verbunden werden sollen. Genauer gesagt, ist der Drehfuß 2-1 des Verbindungsclips 1-1 in einer rechtwinkligen Drehlagerung 12-1 des einen zu verbindenden Bauteils 13-1 angeordnet. Zum leichteren Verständnis ist die obere Abdeckung des zu verbindenden Bauteils 13-1, in dem sich der Verbindungsclip 1-1 befindet, teilweise ausgebrochen, so daß der Verbindungsclip vollständig zu sehen ist. In Wirklichkeit befindet sich der Stab 3-1 des Verbindungsclips 1-1 natürlich zusammen mit seinem Drehfuß 2-1 im Inneren des zu verbindenden Bauteils 13-1 und nur ein Teil des Stabs 3-1 und der Ankerbalken 4-1 ragen aus einer schlitzartigen Öffnung der Nut 7-1 aus dem zu verbindenden Bauteil 13-1 hervor. Der Verbindungsclip 1-1 ist um seinen Drehfuß 2-1 drehbar. Wird nun der Verbindungsclip 1-1 um den Drehfuß 2-1 in Pfeilrichtung A aus Fig. 6 gedreht, gelangt der Verbindungsclip mit dem zweiten zu verbindenden Bauteil 14-1 in Eingriff, wie in Fig. 7 gezeigt ist. In Fig. 7 befindet sich der Verbindungsclip 1-1 in seiner geschlossenen Position.

Wie anhand der Fig.en 6 und 7 ersichtlich ist, sind die beiden Bauteile 13-1 und 14-1 hinsichtlich der Ausgestaltung für die Aufnahme eines Verbindungsclips gleich ausgestaltet. D.h. man kann völlig flexibel wahlweise den Verbindungsclip 1-1 des Bauteils 13-1 zur Verbindung mit dem Bauteil 14-1 mit der dort vorgesehenen, dazu korrespondierenden Aufnahme in Eingriff bringen und umgekehrt könnte man einen Verbindungsclip, der in dem Bauteil 14-1 vorgesehen ist, mit der in dem Bauteil 13-1 vorgesehenen Aufnahme in Eingriff bringen. Mit dem Bezugszeichen 12-1 ist eine Drehfußlagerung bezeichnet, die dazu dient, den Drehfuß 2-1 in zwei Richtungen abzustützen, wobei der Verbindungsclip 1-1 um die Achse des Drehfußes 2-1 drehbar bleibt. Die Drehfußlagerung 12-1 wird aus einem Wandabschnitt 12a-1 und einem weiteren Wandabschnitt 12b-1 gebildet. Der Wandabschnitt 12a-1 ist nicht so hoch wie der Wandabschnitt 12b-1 ausgebildet. Der Wandabschnitt 12a-1 wird gebildet, indem die Hinterschneidung 9-1 der Nut 7-1 vor dem Ende der Nut aufhört. Der Wandabschnitt 12a-1 ist notwendig, damit der Drehfuß 2-1 in Anlage daran gelangen kann, der Stab 3-1 aber über diesen Wandabschnitt 12a-1 hinweggleiten kann, damit der Verbindungsclip 1-1 so verschwenkt werden kann, um überhaupt in das zu verbindende Bauteil 14-1 eingreifen zu können (s. Fig. 6 und 7). Der Wandabschnitt 12b-1 ist so hoch ausgebildet, daß auch der Stab 3-1 in Anlage an diesen Wandabschnitt gelangt, so daß die Drehung des Verbindungsclips durch diesen Wandabschnitt begrenzt wird. Damit wird sichergestellt, daß der Verbindungsclip nicht weiter nach innen schwenken kann, wo er unter Umständen für das Montagepersonal nicht mehr zugänglich ist.

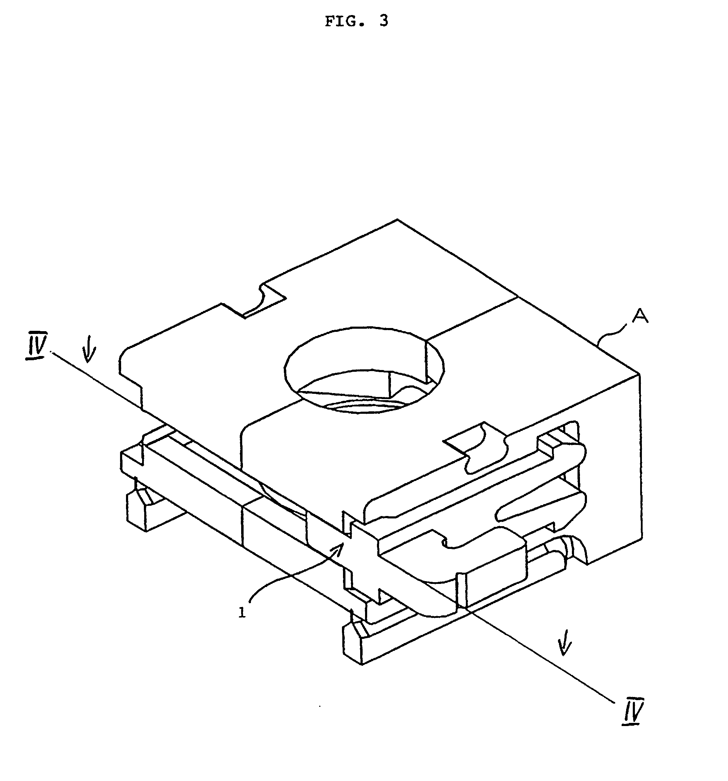

Im Anschluß an den Wandabschnitt 12b-1 befindet sich im rechten Winkel dazu die Ausnehmung 11-1 mit der Hinterschneidung, die korrespondierend zu einer Einschnappseite des Einschnappabschnitts 4a des Ankerbalkens 4-1 des Verbindungsclips 1-1 ausgestaltet ist. Wenn nun der Verbindungsclip 1-1 um die Drehachse seines Drehfußes 2-1 herum gedreht wird, wie in den Fig. 6 und 3-1 zu sehen ist, kann der Verbindungsclip so lange gedreht werden, bis er mit einer Anlagefläche seines Stabes 3-1 in Anlage mit dem Wandabschnitt 12b-1 gerät und der gekrümmte Einschnappabschnitt 4a-1 in die Hinterschneidung der Ausnehmung 11-1 einschnappt. Dieser Zustand ist in Fig. 7 gezeigt. In diesem Zustand werden im vorliegenden Ausführungsbeispiel Hilfs- und Hauptgerät 13-1, 14-1 fest miteinander verbunden. Die Abmessungen des Verbindungsclips in Verbindung mit einer geeigneten Wahl der Abmessungen der Ausnehmung 11-1 in dem zu verbindenden Bauteil sind so gewählt, daß der Verbindungsclip beim Einführen die beiden zu verbindenden Bauteile miteinander verspannt.

Wie in Fig. 7 zu erkennen ist, ragt der dem eingeschnappten Einschnappabschnitt 4a-1 gegenüberliegende Einschnappabschnitt 4a-1 des Ankerbalkens des Verbindungsclips in die Nut 7-1 des Hilfsgeräts 14-1, durch den der Verbindungsclip 1-1 nach innen geschwenkt werden konnte. Dadurch bleibt der Verbindungsclip auch in seiner geschlossenen Stellung von außen zugänglich, zumindest für ein Hilfswerkzeug, wie beispielsweise einen kleinen Schraubendreher. Dadurch kann die Verbindung der beiden Bauteile wieder gelöst werden. Somit ist das Hilfsgerät leicht an dem Hauptgerät anbringbar und ebenso leicht wieder davon lösbar.

Wie beispielsweise aus den Fig. 4 und 5 hervorgeht, ist der Verbindungsclip auf dem Ankerbalken 4-1 in der Mitte, gegenüber dem Stab 3-1, mit einer V-förmigen Kerbe 6-1 ausgestattet. Diese Kerbe 6-1 erlaubt eine noch leichtere Lösung des Verbindungsclips mittels einem Hilfswerkzeug, um die in die Hinterschnitte 11-1 eingeschnappten Einschnappabschnitte 4a-1 aus der geschlossenen Position in die geöffnete Position zu bewegen. Beispielsweise kann mit einem kleinen Schraubendreher leicht in die Kerbe eingegriffen werden und somit der Verbindungsclip herausgedrückt werden.

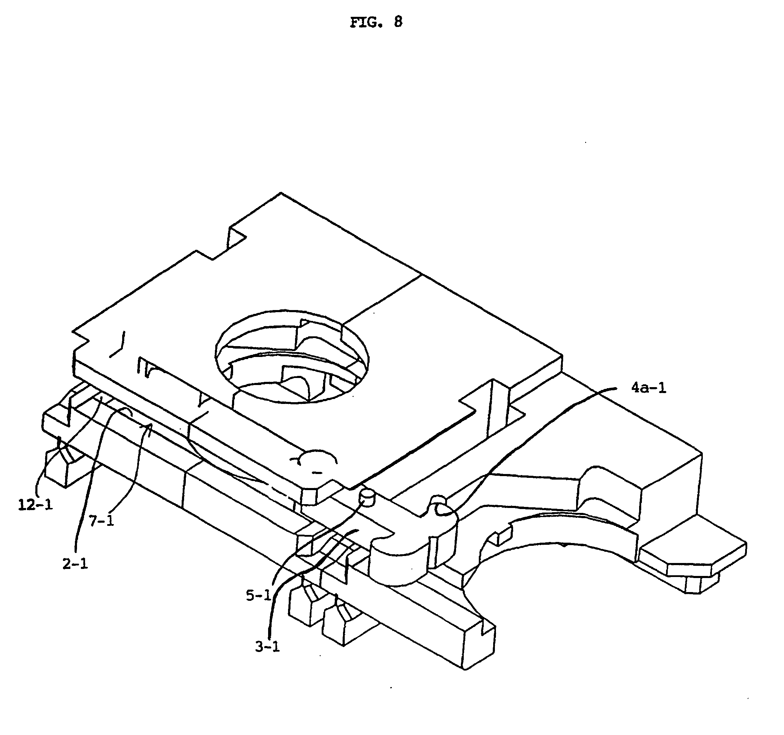

Wie ferner beispielsweise aus Fig. 8 hervorgeht, wo das Hilfsgerät vollständig gezeigt ist (d.h. ohne teilweise Ausbrüche), ist der Verbindungsclip innerhalb der Nut 7-1 von rechts nach links und umgekehrt frei verschiebbar, so daß er wahlweise von einer Drehfußlagerung 12-1 an einer Seite zu einer weiteren an der anderen Seite verschoben werden kann. Dadurch kann an das Hilfsgerät 13-1 wahlweise links und/oder rechts ein Hauptgerät 14-1 montiert werden. Dadurch wird eine maximale Flexibilität bei der Montage gewährleistet.

Wie des weiteren aus Fig. 6 hervorgeht, dient der Zapfen 5-1 am Verbindungsclip 1-1 dazu, zu verhindern, daß der Verbindungsclip versehentlich vollständig in der Nut 7-1 des zu verbindenden Bauteils 13-1 verschwindet, wenn sich der Verbindungsclip irgendwo in der Mitte der Nut 7-1 befindet, indem der Zapfen 5-1 an die die Nut 7-1 bildenden Wände des Bauteils 13-1 anschlägt. Dadurch kann der Ankerbalken 4-1 des Verbindungsclips nicht vollständig nach innen in das Bauteil eingeschwenkt werden, d.h. sein Drehbereich ist im mittleren Bereich, d.h. dem nicht seitlichen Bereich, stärker begrenzt als in den Seitenbereichen, wo die Nut 7-1 offen ist und eine Verschwenkung des Verbindungsclips 1-1 zuläßt, bis der Stab 3-1 an der Anlagefläche 12b-1 in Anlage gelangt.

Zusätzlich ist jeweils seitlich an den angrenzenden Seitenflächen der zu verbindenden Bauteile 13-1, 14-1 eine abschnittsweise Zurücksetzung 8-1 vorgesehen. Werden zwei zu verbindende Bauteile aneinandergelegt, so entsteht aus den beiden angrenzenden abschnittsweisen Zurücksetzungen 8-1 eine Nut 10-1. Wenn der Verbindungsclip in die geschlossene Position gebracht wird, d.h. wenn der Verbindungsclip in seine geschlossene Position verschwenkt wird (in Pfeilrichtung A in Fig. 6), schwenkt der bereits beschriebene Zapfen 5-1 in diese Nut 10-1 ein. Dadurch behindert der Zapfen 5-1 zum einen die Montage der beiden zu verbindenden Bauteile nicht, und zum anderen kann er zusätzlich zur Führung dienen. Um es dem Zapfen 5-1 überhaupt zu ermöglichen, in die Nut 10-1 eingeschwenkt zu werden, sind an den Ecken jeweils Montagehilfsschrägen 15-1 vorgesehen. Selbstverständlich muß es sich dabei nicht um reine Hilfsschrägen handeln. Vielmehr kann auch eine Rundung oder irgendeine andere geeignete Form vorgesehen werden, damit der Zapfen 5-1 ungehindert in die verschwenkte Position gelangen kann.

Wie bei einem Vergleich des ersten Ausführungsbeispiels der Fig. 1 bis 4 mit dem zweiten Ausführungsbeispiel der Fig. 5 bis 8 hervorgeht, sind die Verbindungsclipaufnahmen beider Ausführungsbeispiele gleich ausgebildet. Sie sind so gestaltet, daß beide Verbindungsclips wahlweise eingesteckt werden können. Das heißt, daß mehrere Funktionsflächen der Verbindungsclipaufnahmen eine doppelte Funktion haben, nämlich zum einen zur Aufnahme des Verbindungsclips des ersten Ausführungsbeispiels und zum anderen zur Aufnahme des Verbindungsclips des zweiten Ausführungsbeispiels.

Dabei entsprechen beispielsweise Teilabschnitte der Nut 10-1 des zweiten Ausführungsbeispiels Teilabschnitten der Nut 22 des ersten Ausführungsbeispiels. Ferner ist beispielsweise in Fig. 4 zu erkennen, daß die Einsteckaufnahme 25 zur Aufnahme des Einsteckabschnitts 4 des Verbindungsclips des ersten Ausführungsbeispiels mit einer Hinterschneidung 27 ausgebildet ist, die der Hinterschneidung 11-1 der Verbindungsclipaufnahme des zweiten Ausführungsbeispiels entspricht. Ferner ist in Fig. 1 erkennbar, daß die Verbindungsclipaufnahme des ersten Ausführungsbeispiels eine Nut mit Hinterschneidung aufweist, wie sie zur Aufnahme des Verbindungsclips 1-1 des zweiten Ausführungsbeispiels notwendig ist.

Zusammenfassend kann man sagen, daß die Verbindungsclipaufnahme beider vorstehend beschriebener Ausführungsbeispiele alle Merkmale aufweist, die zur wahlweisen Aufnahme der Verbindungsclips des ersten oder des zweiten Verbindungsclips notwendig sind. Somit ist die Konstruktion der Verbindungsclipaufnahme multifunktionell.

Der Verbindungsclip kann aus Kunststoff hergestellt sein. Dabei kann eine Kunststofformspritztechnik angewandt werden, die ein einstückiges Ausbilden des Verbindungsclips ermöglicht und somit für eine kostengünstige Herstellung sorgt. Gleiches gilt für die Herstellung der Verbindungsclipaufnahme, deren Herstellung bereits bei der Herstellung des zu verbindenden Bauteils berücksichtigt werden kann.

Durch die geeignete Auswahl des Kunststoffs kann der Verbindungsclip ferner mit einer gewünschten Flexibilität versehen werden. Durch das jeweilige Vorsehen der Verbindungsclipaufnahmen an zwei sich gegenüberliegenden Seiten eines zu verbindenden Bauteils A, B, können die Einzelkomponenten in beliebiger Anzahl in Reihe zusammengefügt werden.

Die vorstehend beschriebene Erfindung ist insbesondere für elektrische Schaltgeräte wie Leitungsschutzschalter, Fehlerstromschutzschalter, Hilfsschalter oder ähnliches vorgesehen. Vorteilhafterweise sind dann alle Geräte einer Serie mit Verbindungsclipaufnahmen der obengenannten Art ausgestattet, so daß sie sich zu beliebigen Funktionseinheiten zusammensetzen lassen.

Soll beispielsweise eine Funktionseinheit aus drei oder vier Leitungsschutzschaltern gebildet werden, werden diese Geräte mit nicht lösbaren Verbindungsclips gemäß dem ersten Ausführungsbeispiel verbunden. Zur Erzielung einer gewünschten Stabilität weisen dann alle Leitungsschutzschalter beispielsweise drei Clipaufnahmen auf. Dabei könnte jeweils eine im Bereich der Anschlußklemmen, wie in den Fig.en gezeigt, und eine im Boden des Gerätes angeordnet sein.

Soll dagegen ein Hilfsschalter mit einem Leitungsschutzschalter kombiniert werden, wird der Hilfsschalter bereits werkseitig beispielsweise mit zwei lösbaren Verbindungsclips gemäß dem zweiten Ausführungsbeispiel ausgestattet und damit dann in die Verbindungsclipaufnahmen des Leitungsschutzschalters eingeclipst.

Selbstverständlich müssen dabei alle Clipaufnahmen der Geräte einer Serie in derselben Höhe vorgesehen sein, da die verbundenen Geräte dann auf derselben Hutschiene angeordnet werden.

## Patentansprüche

1. Verbindungsclip (1) zur Verbindung von mindestens zwei Bauteilen, bestehend aus einem Stab (2) und einem sich an einem Ende quer dazu erstreckenden Ankerbalken (3),
wobei der Stab (2) am anderen Ende als elastisches Einschnappelement (5) ausgebildet ist, **dadurch gekennzeichnet, dass** der Ankerbalken (3) an beiden Seiten jeweils in Stabrichtung gebogene Einsteckabschnitte (4) aufweist.

2. Verbindungsclip gemäß Anspruch 1, **dadurch gekennzeichnet, daß** das Einschnappelement (5) eine mittige Aussparung (7) und mindestens eine Einschnappnase (11) aufweist, wobei sich die Einschnappnase (11) auf der der Aussparung (7) abgewandten Seite des Einschnappelements (5) erstreckt, so daß eine Hinterschneidung (8) entsteht.

3. Verbindungsclip gemäß einem der vorhergehenden Ansprüche, **dadurch gekennzeichnet, daß** der Ankerbalken (3) im umgebogenen Eckbereich außenseitig eine Kerbe (9) aufweist.

4. Verbindungsclip gemäß einem der vorhergehenden Ansprüche, **dadurch gekennzeichnet, daß** der Ankerbalken (3) im umgebogenen Eckbereich innenseitig eine Ausnehmung (10) aufweist.

5. Verbindungsclip gemäß einem der vorhergehenden Ansprüche, **dadurch gekennzeichnet, daß** der Einsteckabschnitt (4) des Ankerbalkens (3) um ca. 90° in Richtung parallel zum Stab (2) gebogen ist.

6. Verbindungsclip gemäß einem der vorhergehenden Ansprüche, **dadurch gekennzeichnet, daß** sowohl der Stab (2) als auch der Ankerbalken (3) eine längliche Querschnittsgestalt aufweisen, wobei beide Querschnitte in ihren Längsausrichtungen quer zueinander ausgerichtet sind.

7. Verbindungsclip gemäß dem vorhergehenden Anspruch, **dadurch gekennzeichnet, daß** der Stab (2) auf beiden Seiten des Ankerbalkens (3) etwas hervorsteht.

8. Verbindungsclipaufnahme in einem zu verbindenden Bauteil, bestehend aus:
- einer Nut (20) in einer Verbindungsseitenfläche eines zu verbindenden Bauteils (A, B), die mindestens an einem Ende des Bauteils offen ist, wobei die Nut (20) einen Einführabschnitt (21) und einen breiteren Einschnappabschnitt (22) aufweist, so daß bezüglich des Einführabschnitts (21) eine Hinterschneidung (24) ausgebildet ist, **gekennzeichnet durch**
- eine Einsteckaufnahme (25), die sich parallel zur Nut (20) neben dieser ins Innere des zu verbindenden Bauteils (A, B) erstreckt.

9. Verbindungsclipaufnahme gemäß dem vorangehenden Anspruch, **dadurch gekennzeichnet, daß** die Nut (20) am offenen Ende ein Paar Montagehilfsschrägen (23) an den gegenüberliegenden Nutwänden aufweist.

10. Verbindungsclipaufnahme in einem zu verbindenden Bauteil gemäß einem der beiden voranstehenden Ansprüche, **dadurch gekennzeichnet, daß** mehrere Nuten (20) sowie mehrere Einsteckaufnahmen (25) in einem zu verbindenden Bauteil (A, B) vorgesehen sind.

11. Elektrisches Gerät mit einer Verbindungseinrichtung zur Verbindung mit einem zweiten elektrischen Gerät, bestehend aus einem Verbindungsclip (1) gemäß einem der Ansprüche 1 bis 7 und aus zwei Verbindungsclipaufnahmen gemäß einem der Ansprüche 8 bis 10.

12. Elektrisches Gerät mit einer Verbindungseinrichtung gemäß dem vorangehenden Anspruch, **dadurch gekennzeichnet, daß** ein Verbindungsclip (1) im montierten Zustand vollständig in den zu verbindenden Bauteilen (A, B) aufgenommen wird.

13. Elektrisches Gerät mit einer Verbindungseinrichtung gemäß Anspruch 11, **dadurch gekennzeichnet, daß** die Nuttiefe (d/2) der Nut (20) der Verbindungsclipaufnahme etwa die Hälfte der Dicke (d) des Verbindungsclips (1) beträgt, so daß der Verbindungsclip im montierten Zustand zur einen Hälfte in der Nut (20) eines der zu verbindenden Bauteile (A) eingeschnappt ist, während er gleichzeitig zur anderen Hälfte in der Nut (20) des angrenzenden anderen zu verbindenden Bauteils (B) eingeschnappt ist.

14. Verbindungsclipaufnahme gemäß einem der vorangehenden Ansprüche 8 bis 13, die in einem zu verbindenden Bauteil (13-1, 14-1) vorgesehen ist, zusätzlich bestehend aus:
einer zumindest an einem Ende offenen Nut (7-1) für die Führung des Stabs (3-1) des Verbindungsclips (1-1), welche eine Hinterschneidung (9-1) aufweist, wobei die Hinterschneidung zumindest am offenen Ende der Nut (7-1) vorher endet, so daß eine Anlagefläche (12a-1) gebildet ist, die als Drehlagerung (12-1) für den Drehfuß (2-1) des Verbindungsclips (1-1) dient.

15. Verbindungsclipaufnahme gemäß dem vorhergehenden Anspruch, **dadurch gekennzeichnet, daß** die Hinterschneidung (9-1) der Nut (7-1) an beiden seitlichen Enden der Nut vorher endet, so daß an beiden Enden jeweils eine Anlagefläche (12a-1) gebildet wird, die als Drehlagerung (12-1) für den Drehfuß (2-1) des Verbindungsclips (1-1) dient.

16. Eingriffsaufnahme für den Eingriff eines Verbindungsclips (1-1) gemäß einem der beiden vorhergehenden Ansprüche, die in einem zu verbindenden Bauteil (13-1, 14-1) vorgesehen ist, bestehend aus einer Ausnehmung (11-1), die an der Einsteckaufnahme (25) ausgebildet ist und die eine Form aufweist, die in etwa der Negativform eines Eingriffsflächenabschnitts einer Hälfte des Ankerbalkens bzgl. des Stabes (3-1) entspricht.

17. Eingriffsaufnahme gemäß dem vorhergehenden Anspruch, **dadurch gekennzeichnet, daß** eine solche Ausnehmung (11-1) in beiden Eckbereichen des zu verbindenden Bauteils (13-1, 14-1) vorgesehen ist, um wahlweise rechts und/oder links eine Hälfte des Ankerbalkens aufnehmen zu können.

18. Eingriffsaufnahme gemäß den beiden vorhergehenden Ansprüchen, **dadurch gekennzeichnet, daß** die Ausnehmung (11-1) eine Hinterschneidung aufweist.

19. Verbindungsclipaufnahme gemäß einem der Ansprüche 14 und 15, bzw. Eingriffsaufnahme gemäß einem der Ansprüche 16 bis 18, **dadurch gekennzeichnet, daß** an der Außenseite des zu verbindenden Bauteils, die als Anlageseite für ein damit zu verbindendes Bauteil dient, eine abschnittsweise Zurücksetzung (8-1) vorgesehen ist, die von der Nut (20) gebildet wird.

20. Verbindungsclipaufnahme gemäß dem vorhergehenden Anspruch, **dadurch gekennzeichnet, daß** beim korrespondierenden Anlegen eines zweiten derartig ausgebildeten zu verbindenden Bauteils eine gemeinsame Nut (10-1) ausgebildet ist.

21. Verbindungsclipaufnahme gemäß einem der beiden vorhergehenden Ansprüche, **dadurch gekennzeichnet, daß** am Eingangsbereich der abschnittsweisen Zurücksetzung (8-1) eine Montagehilfsschräge (16-1) vorgesehen ist.

22. Elektrisches Bauteil mit einem Gehäuse, **dadurch gekennzeichnet, daß** an dem Gehäuse an einer Mehrzahl von voneinander beabstandeten Stellen eine Verbindungsclipaufnahme bzw. eine Eingriffsaufnahme bzw. eine Verbindungseinrichtung nach einem der Ansprüche 14 bis 21 vorgesehen ist.

## Claims

1. Connecting clip (1) for connecting at least two components, consisting of a pin (2) and an anchor bar (3) extending transversely to this at one end, whereby the pin (2) is formed at the other end as an elastic snap-in element (5), **characterised in that** the anchor bar (3) possesses at both ends plug-in sections (4) bent in the direction of the pin.

2. Connecting clip in accordance with claim 1, **characterised in that** the snap-in element (5) possesses a central cut-out (7) and at least one snap-in lug (11). whereby the snap-in lug (11) extends on the side of the snap-in element (5) facing away from the cut-out (7), so that an undercut (8) results.

3. Connecting clip in accordance with one of the preceding claims, **characterised in that** the anchor bar (3) features a notch (9) on the outside of the bent comer area.

4. Connecting clip in accordance with one of the preceding claims, **characterised in that** the anchor bar (3) features a recess (10) on the inside of the bent corner area.

5. Connecting clip in accordance with one of the preceding claims, **characterised in that** the plug-in section (4) of the anchor bar (3) is bent by approx. 90° in a direction parallel to the pin (2).

6. Connecting clip in accordance with one of the preceding claims, **characterised in that** both the pin (2) and the anchor bar (3) display an elongated cross-sectional form, whereby both cross sections are aligned perpendicular to one another in their longitudinal alignments.

7. Connecting clip in accordance with one of the preceding claims, **characterised in that** the pin (2) projects slightly on both sides of the anchor bar (3).

8. Connecting clip socket in a component which is to be connected, consisting of:
- a slot (20) in a connecting side surface of a component (A, B) which is to be connected which is open at at least one end of the component, whereby the slot (20) features an insertion section (21) and a wider snap-in section (22), so that an undercut (24) is formed in relation to the snap-in section (22), **characterised by**
- a plug-in socket (25) which extends parallel to the slot (20) next to this in the interior of the component (A, B) which is to be connected.

9. Connecting clip in accordance with the preceding claim, **characterised in that** the slot (20) features on the open end a pair of bevels facilitating assembly (23) on the opposing walls of the slot.

10. Connecting clip socket in a component which is to be connected in accordance with one of the preceding claims, **characterised in that** several slots (20) and several plug-in sockets (25) are provided in a component which is to be connected (A, B).

11. Electrical device with a connecting device for connection with a second electrical device, consisting of a connecting clip (1) in accordance with one of claims 1 to 7 and two connecting clip sockets in accordance with one of the claims 8 to 10.

12. Electrical device with a connecting device in accordance with the preceding claim, **characterised in that**, in assembled condition, a connecting clip (1) is completely received into the components which are to be connected (A, B).

13. Electrical device with a connecting device in accordance with claim 11, **characterised in that** the depth (d/2) of the slot (20) of the connecting clip socket is around half the thickness (d) of the connecting clip (1), so that, when connected, half of the connecting clip is clipped into the slot (20) of one of the components which is to be connected (A), whereas at the same time half of it is clipped into the slot (20) of the other, adjacent, component which is to be connected (B).

14. Connecting clip socket in accordance with one of the preceding claims 8 to 13, which is provided in a component which is to be connected (13-1, 14-1), additionally consisting of:
a slot (7-1), open at at least one end, for guiding the pin of the connecting clip (1-1). which features an undercut (9-1), whereby the undercut ends prematurely at least at the open end of the slot (7-1), so that a contact surface (12a-1) is formed which serves as a rotary bearing (12-1) for the rotary foot (2-1) of the connecting dip (1-1).

15. Connecting clip socket in accordance with the preceding claim, **characterised in that** the undercut (9-1) of the slot (7-1) ends prematurely at both lateral ends of the slot, so that a contact surface (12a-1) is formed at each end which serves as a rotary bearing (12-1) for the rotary foot (2-1) of the connecting clip (1-1).

16. Engaging socket for engaging a connecting clip (1-1) in accordance with one of the two preceding claims which is provided in a component which is to be connected (13-1, 14-1), consisting of a recess (11-1) which is formed on the plug-in socket (25) and which displays a form which corresponds roughly to the negative form of an engaging surface section of one half of the anchor bar of the pin (3-1).

17. Engaging socket in accordance with the preceding claim, **characterised in that** such a recess (11-1) is provided in both comer areas of the component which is to be connected (13-1, 14-1) in order to allow one half of the anchor bar to be received selectively on the right or left.

18. Engaging socket in accordance with the two preceding claims, **characterised in that** the recess (11-1) features an undercut

19. Connecting clip socket in accordance with one of the claims 14 and 15 and engaging socket in accordance with one of the claims 16 to 18, **characterised in that** a recessed section (8-1) which is formed by the slof (20) is provided on the outside of the component which is to be connected, which serves as a contact surface for a component which is to be connected.

20. Connecting clip socket in accordance with the preceding claim, **characterised in that**, when a second component which is to be connected is correspondingly placed against it, a common slot (10-1) is formed.

21. Connecting clip socket in accordance with one of the two preceding claims, **characterised in that** a bevel facilitating assembly (16-1) is provided in the entry area of the recessed section (8-1).

22. Electrical component with a casing, **characterised in that** a connecting clip socket or an engaging socket or a connecting device in accordance with one of the claims 14 to 21 is provided in a plurality of positions spaced at intervals on the casing.

## Revendications

1. Clip d'assemblage (1) pour relier au moins deux éléments de construction, comprenant une tige (2) et une traverse d'ancrage (3) qui s'étend transversalement à celle-ci, la tige (2), à son autre extrémité, étant conformée en élément encliquetable (5) élastique, **caractérisé en ce que** la traverse d'ancrage (3) présente des deux côtés des parties enfichables (4) qui sont recourbées dans la direction de la tige.

2. Clip d'assemblage selon la revendication 1, **caractérisé en ce que** l'élément encliquetable (5) présente une échancrure (7) centrale et au moins un nez d'encliquetage (11), le nez d'encliquetage (11) s'étendant du côté de l'élément encliquetable (5) opposé à l'échancrure, de manière à former une contre-dépouille (8).

3. Clip d'assemblage selon une des revendications précédentes, **caractérisé en ce que** la traverse d'ancrage (3), dans la région de l'angle de pliage, présente une encoche (9) extérieure.

4. Clip d'assemblage selon une des revendications précédentes, **caractérisé en ce que** la traverse d'ancrage (3), dans la région de l'angle de pliage, présente un évidement (9) intérieur.

5. Clip d'assemblage selon une des revendications précédentes, **caractérisé en ce que** la partie enfichable (4) de la traverse d'ancrage (3) est pliée à environ 90° dans une direction parallèle à la tige (2).

6. Clip d'assemblage selon une des revendications précédentes, **caractérisé en ce que** la tige (2) et la traverse d'ancrage (3), en section transversale, présentent une forme allongée, les grands côtés des deux sections transversales étant orientés transversalement l'un à l'autre.

7. Clip d'assemblage selon une des revendications précédentes, **caractérisé en ce que** la tige (2) dépasse légèrement des deux côtés de la traverse d'ancrage (3).

8. Logement de clip d'assemblage aménagé dans un élément de construction comprenant :
• une rainure (20) aménagée dans une surface latérale d'assemblage d'un élément de construction (A, B) à relier et ouverte à une extrémité au moins, la rainure (20) comportant une portion d'insertion (21) et une portion d'encliquetage (22) plus large, de manière à former une contre-dépouille (24) par rapport à la portion d'insertion (21),
**caractérisé par**
• un logement enfichable (25) qui s'étend parallèlement à la rainure (20, dans le voisinage de celle-ci, à l'intérieur de l'élément de construction (A, B) à relier.

9. Logement de clip d'assemblage selon la revendication précédente, **caractérisé en ce que** la rainure (20), à son extrémité ouverte présente une paire de surfaces inclinées d'aide au montage (23) aménagées sur des parois de rainure en vis-à-vis.

10. Logement de clip d'assemblage aménagé dans un élément de construction à relier selon une des deux revendications précédentes, **caractérisé en ce que** plusieurs rainures (20) et plusieurs logements d'enfichage (25) sont prévus dans un élément de construction (A, B) à relier.

11. Appareil électrique comportant un dispositif d'assemblage pour la liaison avec un deuxième appareil électrique, comprenant un clip d'assemblage (1) selon une des revendications 1 à 7 et deux logements de clip d'assemblage selon une des revendications 8 à 10.

12. Appareil électrique comportant un dispositif d'assemblage selon la revendication précédente, **caractérisé en ce qu'**un clip d'assemblage (1), à l'état monté est entièrement logé dans les éléments de construction (A, B) à assembler.

13. Appareil électrique comportant un dispositif d'assemblage selon la revendication 11, **caractérisé en ce que** la profondeur (d/2) de la rainure (20) du logement de clip d'assemblage correspond sensiblement à la moitié de l'épaisseur (d) du clip d'assemblage (1), de sorte que le clip d'assemblage, à l'état monté, pour une moitié est encliqueté dans la rainure (20) de l'un des éléments de construction (A) à relier, tandis que son autre moitié est encliquetée dans la rainure (20) de l'autre élément de construction (B) voisin.

14. Logement de clip d'assemblage selon une des revendications 8 à 13 aménagé dans un élément de construction (13-1, 14-1) à assembler, comprenant en outre :
une rainure (7-1) ouverte d'un côté pour recevoir la tige (3-1) du clip d'assemblage (1-1), qui présente une contre-dépouille (9-1), la contre-dépouille, au moins à l'extrémité ouverte de la rainure (7-1), se terminant plus tôt pour former une surface d'appui (12a-1) qui sert de palier (12-1) pour le pivot (2-1) du clip d'assemblage (1-1).

15. Logement de clip d'assemblage selon la revendication précédente, **caractérisé en ce que** la contre-épouille aux deux extrémités latérales de la rainure, se terminant plus tôt, une surface d'appui (12a-1) étant ainsi formée qui sert de palier (12-1) pour le pivot (2-1) du clip d'assemblage (1-1).

16. Logement d'encliquetage pour l'encliquetage d'un clip d'assemblage (1-1) selon une des deux revendications précédentes, aménagé dans un élément de construction (13-1, 14-1) à relier, comprenant un évidement (11-1) qui est aménagé dans le logement d'enfichage (25) et présente une forme qui correspond sensiblement à la forme en négatif d'une portion de surface active d'une moitié de la traverse d'ancrage par rapport à la tige (3-1).

17. Logement d'encliquetage selon la revendication précédente, **caractérisé en ce qu'**un évidement (11-1) de ce type est prévu dans les deux régions d'angle de l'élément de construction (13-1, 14-1) à relier, afin de pouvoir recevoir au choix à droite et/ou à gauche une moitié de la traverse d'ancrage.

18. Logement d'encliquetage selon les deux revendications précédentes, **caractérisé en ce que** l'évidement (11-1) présente une contre-dépouille.

19. Logement de clip d'assemblage selon une des revendications 14 et 15, ou logement d'encliquetage selon une des revendications 16 à 18, **caractérisé en ce qu'**il est prévu sur la face extérieure de l'élément de construction à relier, servant de surface d'appui pour un élément de construction à relier au premier, une partie en retrait (8-1) qui est formée par la rainure (20).

20. Logement de clip d'assemblage selon la revendication précédente, **caractérisé en ce que** par le rapprochement avec un deuxième élément de construction à relier agencé de la même manière, une rainure (10-1) commune est formée.

21. Logement de clip d'assemblage selon une des deux revendications précédentes, **caractérisé en ce qu'**une rampe d'aide au montage (16-1) est prévue au niveau de la portion d'entrée de la partie en retrait (8-1).

22. Elément de construction électrique comportant un boîtier, **caractérisé en ce qu'**il est prévu sur le boîtier, en plusieurs emplacements espacés les uns des autres, un logement de clip d'assemblage ou un logement d'encliquetage ou un dispositif d'assemblage selon une des revendications 14 à 21.
